# FASCICULE DE BREVET EUROPEEN

(11) **EP 1 628 920 B1**
(45) Date de publication et mention de la délivrance du brevet: **19.03.2008**
(21) Numéro de dépôt: 04742763.8
(22) Date de dépôt: 17.05.2004
(51) Int. Cl.: C02F 1/32

(54) **DISPOSITIF DE DESINFECTION D'EAU PAR RAYONNEMENT ULTRAVIOLET**
VORRICHTUNG ZUR DESINFEKTION VON WASSER DURCH ULTRAVIOLETTE STRAHLUNG
DEVICE FOR DISINFECTING WATER BY MEANS OF ULTRAVIOLET RADIATION

(30) Priorité: 02.06.2003 FR 0306638
(43) Date de publication de la demande: 01.03.2006
(73) Titulaire: OTV SA, 94417 Saint-Maurice Cédex (FR)
(72) Inventeur: GIRODET, Pierre, 94170 Le Perreux sur Marne (FR); VANPEENE, Christian, F-94800 Villejuif (FR)
(74) Mandataire: Larcher, Dominique
(86) Numéro de dépôt international: PCT/FR2004/001217
(87) Numéro de publication internationale: WO 2004/108604

(56) Documents cités:
- WO-A-00/51943
- DE-A- 19 957 073
- NL-C- 1 013 864
- US-A- 5 937 266
- US-B1- 6 231 820
- US-B1- 6 342 188

## Description

L'invention concerne le domaine du traitement des eaux en vue de leur désinfection, tant dans le cadre de procédés d'épuration que de procédés de potabilisation.

Plus précisément, l'invention concerne la désinfection des eaux par rayonnement ultraviolet en chenal ouvert.

Selon une telle technique, l'eau à désinfecter transite dans un chenal ouvert dans sa partie supérieure à l'intérieur duquel sont disposés un ou plusieurs bancs de lampes dispensant un rayonnement ultraviolet d'une longueur d'ondes comprise entre 180 nm et 400 nm.

Ces bancs sont constitués de plusieurs modules montés parallèles entre eux, chaque module comprenant une ou plusieurs séries verticales de lampes UV protégées par des gaines en quartz et disposées selon le sens d'écoulement de l'eau à désinfecter dans le chenal, une poutre et des moyens de support reliant les lampes à cette poutre.

Ces bancs de lampes UV sont disposés dans le chenal de façon telle que l'ensemble des lampes est immergé dans l'eau transitant dans celui-ci. Chaque module est maintenu en place grâce à une poutre pourvue de supports accueillant les lampes dans leur gaine transparente aux UV.

Les lampes sont disposées de façon telle que leur axe longitudinal soit essentiellement parallèle à la direction d'écoulement de l'eau dans le chenal pour que l'eau soit en contact le plus longtemps possible avec le rayonnement désinfectant. Les chenaux de désinfection d'eau sont ainsi équipés de plusieurs bancs de lampes disposés dans le chenal les uns à la suite des autres.

Cette technique de désinfection par rayonnement ultraviolet en chenal ouvert existe depuis une vingtaine d'années. Au fur et à mesure de l'évolution de la technique, les lampes UV ont présenté une puissance de plus en plus grande, notamment grâce à la technologie des lampes UV basse pression, permettant à chaque banc de lampes de traiter une quantité d'eau de plus en plus importante.

Or, en particulier lorsque les eaux traitées sont constituées par des eaux usées, un dépôt plus ou moins important se forme sur les gaines de protection des lampes UV, nuisant progressivement à la transmission du rayonnement ultraviolet.

Aussi, il est maintenant courant d'équiper les dispositifs de désinfection d'eau par rayonnement ultraviolet de moyens de nettoyage de ces gaines de protection.

Ces moyens de nettoyage sont constitués par des racleurs automatisés qui effectuent un mouvement de va-et-vient le long des gaines (voir par exemple US 5 937 266 ou WO 00/51943).

Actuellement, les solutions connues mettent en oeuvre un vérin (pneumatique ou hydraulique) par module. En d'autres termes, chaque banc comprend autant de vérins qu'il comprend de modules.

Une telle solution est coûteuse, dans la mesure où de multiples vérins sont nécessaires pour obtenir le nettoyage souhaité, des moyens de pilotage appropriés pour l'ensemble de ces vérins étant également à prévoir.

De plus, une telle technique implique des temps d'installation, et éventuellement de maintenance, relativement importants.

De plus, les vérins actionnant les racleurs étant prévus sur les modules et augmentant ainsi leur poids, ces modules sont souvent difficiles à manipuler.

L'invention a notamment pour objectif de pallier ces inconvénients de l'art antérieur.

Plus précisément, l'invention a pour objectif de proposer un dispositif de désinfection d'eau par rayonnement ultraviolet dans lequel les moyens de nettoyage des gaines de protection des lampes UV sont moins coûteux et moins complexes que ceux de l'art antérieur.

L'invention a également pour objectif de fournir un tel dispositif qui permette de réduire notablement les temps d'installation.

L'invention a aussi pour objectif de fournir un tel dispositif qui facilite et/ou réduit la maintenance.

L'invention a aussi pour objectif de fournir un tel dispositif qui présente une puissance équivalente à celle des dispositifs de l'art antérieur.

Un autre objectif de l'invention est de fournir un tel dispositif dans lequel les moyens de nettoyage sont simples de conception et faciles à mettre en oeuvre.

Ces objectifs, ainsi que d'autres qui apparaîtront par la suite sont atteints grâce à l'invention qui a pour objet un dispositif de désinfection d'eau selon la revendication 1

A l'inverse des solutions classiques, le dispositif selon l'invention évite de mettre en oeuvre une pluralité de vérins dédiés chacun à un chariot, pour actionner les moyens de nettoyage (racleurs). Au contraire, selon l'invention l'ensemble des moyens de nettoyage d'un même banc est actionné avec des moyens communs.

En conséquence, des gains de temps notables peuvent être obtenus tant en termes d'installation qu'en termes de maintenance des moyens d'entraînement des racleurs.

De plus, les moyens communs d'entraînement n'étant pas supportés par les modules, ceux-ci sont beaucoup plus légers et faciles à manipules que les modules de l'art antérieur équipés chacun d'un vérin d'actionnement du chariot.

Enfin, grâce à l'invention, on réduit considérablement le coût du dispositif. Le dispositif est aussi avantageux parce qu'il permet d'installer les moyens communs d'entraînement et les chariots portant les moyens de nettoyage, indépendamment les uns des autres, l'accrochage des uns avec les autres étant obtenu automatiquement au premier mouvement de va-et-vient des moyens d'entraînement.

En outre, si un des chariots vient à se décrocher des moyens d'entraînement, les moyens d'entraînement pourront s'accrocher à nouveau au chariot en question lors du passage suivant des moyens d'entraînement.

Préférentiellement, lesdits moyens d'accrochage automatique sont conçus pour se décrocher lorsque ledit chariot et/ou lesdits moyens de nettoyage transmettent une résistance prédéterminée à l'encontre de la translation desdits moyens d'entraînement.

De cette façon, s'il y a blocage d'un des chariots, l'invention permet de se désolidariser du chariot bloqué tout en continuant à entraîner les autres chariots. Ainsi, les lampes et les gaines du module dont le chariot s'est bloqué sont protégées de toute casse due à la puissance des moyens de nettoyage.

Un tel blocage pourrait par exemple être engendré par une accumulation trop importante du dépôt se formant sur une des gaines de protection, le racleur correspondant venant le cas échéant en butée sur le dépôt accumulé sans pouvoir poursuivre son déplacement. D'autres situations de blocage, par exemple dues aux pièces mécaniques en mouvement, sont bien entendu envisageables.

Selon une solution avantageuse, lesdits moyens d'accrochage automatique incluent des systèmes de liaison non permanente, par exemple du type ressort, aimant...

On obtient ainsi un moyen efficace et simple de conception en vue d'exercer la fonction d'accrochage automatique.

Préférentiellemnent, lesdits systèmes de liaison sont des ressorts.

De tels moyens sont simples de conception, peu coûteux et peuvent aisément et rapidement être mis en oeuvre. En outre, de tels ressorts ont une structure et un fonctionnement tels qu'ils sont peu ou pas soumis à usure et ne nécessitent aucune maintenance ou presque.

Par ailleurs, les ressorts sont particulièrement avantageux en ce qu'ils peuvent fléchir selon une première direction avec une faible force pour permettre l'accrochage des chariots avec les moyens d'entraînement, et en ce qu'ils peuvent également fléchir selon une deuxième direction, opposée à la première, avec un effort plus important que l'effort effectué pour l'accrochage, pour permettre le décrochage d'un chariot dans une situation de blocage telle que mentionnée précédemment.

Préférentiellement, lesdits ressorts s'étendent à partir desdits chariots, en étant convergents l'un vers l'autre en direction desdits moyens commuins d'entraînement de l'ensemble des chariots.

Un tel agencement permet d'assurer les fonctions d'accrochage et de décrochage automatiques quelque soit la direction du déplacement des moyens d'entraînement par rapport aux chariots.

Selon une solution avantageuse, lesdits moyens communs d'entraînement comprennent au moins un vérin électrique, prévu sur au moins un coté dudit banc. On pourra toutefois envisager d'autres modes de réalisation de ces moyens communs d'entraînement, toujours non supportés par les modules, mettant par exemple en oeuvre des moyens formant poulie(s) et courroie(s).

Préférentiellement, les moyens d'entraînement comprennent deux vérins, prévus de part et d'autre dudit banc.

Préférentiellement, ledit vérin ou lesdits vérins porte(nt) au moins une barre s'étendant sensiblement perpendiculairement à l'axe longitudinalement desdits moyens formant lampes.

La barre en question peut ainsi être de conception très simple en présentant une section constante prévue pour coopérer avec chacun des ressorts portés par les chariots.

Selon une variante préférentielle, la course du ou desdits vérins est supérieure à la longueur des poutres des modules. Ainsi, il est possible d'emmener cette barre au-delà des modules pour faciliter la maintenance de ceux-ci.

L'invention concerne également une installation de désinfection d'eau incluant au moins un dispositif de désinfection d'eau par rayonnement ultraviolet tel que décrit précédemment.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés selon lesquels :
- la figure 1 est une vue de côté d'un module d'un banc d'un dispositif de désinfection selon l'invention ;
- la figure 2 est une vue de détails des moyens d'accrochage et de décrochages automatiques d'un dispositif de désinfection selon l'invention ;
- la figure 3 est une vue en coupe d'un chenal recevant un banc de lampes UV réparties en modules et pourvu de moyens communs d'entraînement des chariots non supportés par les modules.

Tel que mentionné précédemment, le dispositif selon l'invention est destiné à équiper une installation de désinfection d'eau comprenant un chenal en béton ouvert dans sa partie supérieure et dans lequel transite une eau à désinfecter.

On rappelle qu'un tel dispositif est constitué par l'association de plusieurs modules de désinfection disposés parallèle entre eux. Une telle association de modules de désinfection est classiquement désignée par le terme « banc » par l'homme de l'art.

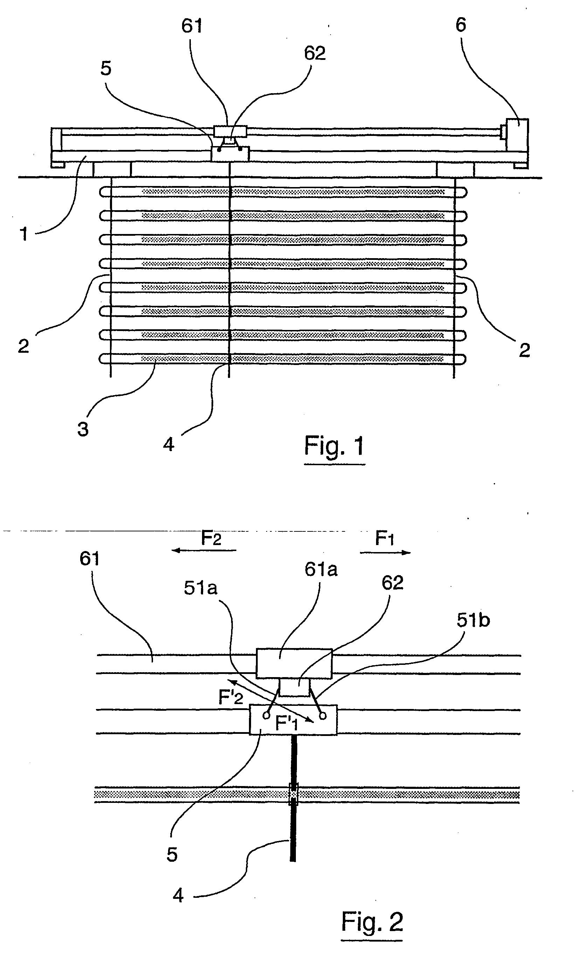

En référence à la figure 1, chaque module est constitué par une poutre 1 à laquelle sont reliés des supports 2 (préférentiellement deux supports par poutre) portant deux séries verticales de moyens formant lampe 3 (on note qu'on entend par « moyens formant lampe » l'ensemble formé par la lampe UV, par sa gaine de protection en matériau transparent aux rayonnements ultraviolets, généralement en quartz, et par un connecteur à l'une de leurs extrémités).

Tel qu'illustré par la figure 1, chaque module comprend également des moyens racleurs 4 montés coulissants sur les moyens formant lampe 3 selon une course correspondant au moins à la longueur des lampes UV, ainsi que sur la poutre 1 par l'intermédiaire d'un chariot 5.

Selon l'invention, le chariot 5 de chaque module est susceptible d'être déplacé le long de la poutre 1 sous l'action de moyens communs d'entraînement.

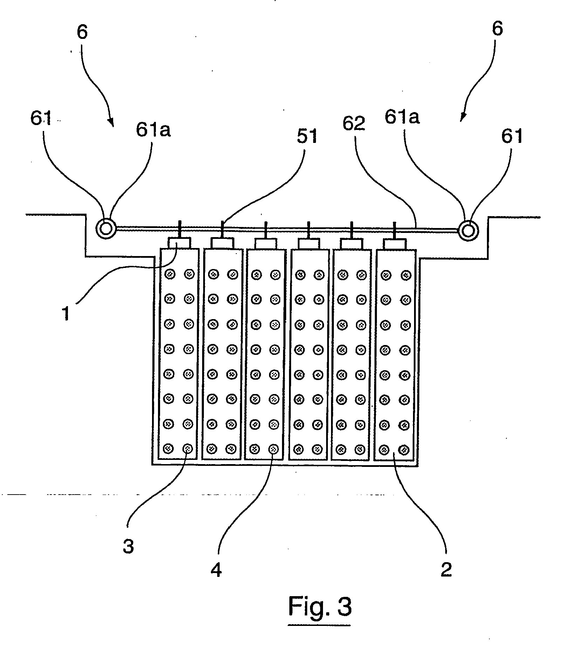

Comme on peut le voir sur la figure 3, ces moyens communs d'entraînement 6 comprennent deux vérins 61 prévus de part et d'autre du banc et donc non supportés par les modules et une barre transversale 62 reliée à l'organe mobile 61 a de ces vérins 61. La barre transversale 62 s'étend sensiblement perpendiculairement par rapport aux moyens formant lampe 3, ceci sur toute la largeur du banc correspondant. Les moyens d'entraînement 6 permettent d'entraîner les chariots sur toute la longueur des gaines des lampes

Les moyens assurant l'accrochage et le décrochage automatique du chariot 5 aux moyens d'entraînement sont illustrés plus en détail par la figure 2.

En référence à la figure 2, le chariot 5 porte deux ressorts 51a, 51b s'étendant à partir du chariot, en étant inclinés. Ces ressorts 51a, 51b définissent entre eux un espace dans lequel vient s'inscrire la barre transversale 62 portée par les vérins 61.

Les fonctions d'accrochage et de décrochage automatiques vont être explicitées plus en détail en référence au fonctionnement décrit ci-après.

Dans l'hypothèse selon laquelle un chariot 5 n'est pas accroché aux moyens d'entraînement 6, lorsque la barre 62 se déplace dans la direction indiquée par la flèche F₁ (en venant de la gauche sur la figure 2), celle-ci vient au contact du ressort 51a et contraint le ressort 51a à fléchir tel qu'indiqué par la flèche F'₁.

La barre 62 vient ensuite en butée contre le ressort 51b, tandis que le ressort 5 la reprend sa position initiale, la barre 62 s'inscrivant alors dans l'espace défini par les deux ressorts 51a et 51b.

Ainsi, de par la raideur des ressorts 51a et 51b, le chariot 5 est solidaire de la barre 62. Dans l'hypothèse selon laquelle le racleur 4 est en situation de blocage, et engendre une résistance supérieure à la raideur de l'un des ressorts 51a, 51b, la barre 62 entraînée par l'organe mobile 61 a les vérins 61 (pour l'exemple, dans la direction indiquée par la flèche F₂) oblige le ressort correspondant (en l'occurrence le ressort 51a) à fléchir tel qu'indiqué par la flèche F'₂, jusqu'à ce que la barre 62 se dégage de son logement.

Les moyens d'entraînement peuvent alors poursuivre leur déplacement, le chariot 5 portant le racleur 4 en situation de blocage demeurant fixe.

On notera que la course des vérins 6 est plus grande que la longueur des poutres 1. Les vérins 61 peuvent ainsi emmener la barre 62 au-delà de l'extrémité de la poutre 1. Les ressorts se déclenchent ainsi tous au même endroit ce qui permet de libérer les modules. Ceux-ci peuvent alors être démontés et sortis du chenal puisque la barre 62 ne se trouve plus au-dessus des modules. Lors de la remise en route, les ressorts se replacent d'eux-mêmes en position de travail au premier passage de la barre 62 au-dessus des modules.

## Revendications

1. Dispositif de désinfection d'eau par rayonnement ultraviolet destiné à être installé dans un chenal ouvert d'une installation de désinfection d'eau par rayonnement ultra-violet, ledit dispositif incluant une pluralité de moyens longitudinaux formant lampes UV (3) constitués chacun d'une lampe UV et d'une gaine de protection en matériau transparent aux UV et étant répartis en une pluralité de modules verticaux formant un banc, chaque module étant constitué d'une poutre (1) à laquelle sont fixés au moins deux moyens formant supports (2) verticaux accueillant au moins une série desdits moyens formant lampes (3) prévus sous ladite poutre (1) les uns au-dessus des autres,et au moins un chariot (5) monté mobile en translation sur chacune desdites poutres (1), lesdits chariots (5) portant des moyens de nettoyage (4) desdites gaines,
**caractérisé en ce qu'**il comprend des moyens communs d'entraînement (6) dudit chariot (5) de chaque module, lesdits moyens d'entraînement étant non supportés par lesdits modules, lesdits moyens communs d'entraînement (6) portant des moyens d'accrochage automatique desdits chariots (5) et/ou chacun desdits chariots (5) portant des moyens d'accrochage automatique auxdits moyens communs d'entraînement (6).

2. Dispositif selon la revendication 1, **caractérisé en ce que** lesdits moyens d'accrochage automatique sont conçus pour se décrocher lorsque ledit chariot et/ou lesdits moyens de nettoyage transmettent une résistance prédéterminée à l'encontre de la translation desdits moyens d'entraînement (6).

3. Dispositif selon l'une quelconque des revendications 1 ou 2, **caractérisé en ce que** lesdits moyens d'accrochage automatique incluent des systèmes de liaison non permanente.

4. Dispositif selon la revendication 3, **caractérisé en ce que** lesdits systèmes de liaison non permanente sont des ressorts (51a), (51b).

5. Dispositif selon l'une quelconque des revendications 1 à 4, **caractérisé en ce que** lesdits moyens communs d'entraînement (6) comprennent au moins un vérin (61) prévu sur au moins un côté dudit banc.

6. Dispositif selon la revendication 5, **caractérisé en ce que** lesdits moyens communs d'entraînement (6) comprennent deux vérins (61), disposés de part et d'autre dudit banc.

7. Dispositif selon la revendication 5 ou 6, **caractérisé en ce que** ledit vérin ou lesdits vérins (61) porte(nt) au moins une barre (62) s'étendant sensiblement perpendiculairement à l'axe longitudinal desdits moyens formant lampes (3).

8. Dispositif selon l'une quelconque des revendications 5 à 7, **caractérisé en ce que** la course du ou des vérins (61) est supérieure à la longueur desdites poutres (1).

9. Installation de désinfection d'eau, **caractérisée en ce qu'**elle inclut au moins un dispositif de désinfection d'eau par rayonnement ultraviolet destiné à être installé dans un chenal ouvert d'une installation de désinfection d'eau par rayonnement ultra-violet, ledit dispositif incluant une pluralité de moyens longitudinaux formant lampes UV (3) constitués chacun d'une lampe UV et d'une gaine de protection en matériau transparent aux UV et étant répartis en une pluralité de modules verticaux formant un banc, chaque module étant constitué d'une poutre (1) à laquelle sont fixés au moins deux moyens formant supports (2) verticaux accueillant au moins une série desdits moyens formant lampes (3) prévus sous ladite poutre (1) les uns au-dessus des autres, et d'au moins un chariot (5) monté mobile en translation sur chacune desdites poutres (1), lesdits chariots portant des moyens de nettoyage (4) desdites gaines, **caractérisé en ce que** ledit dispositif comprend des moyens communs d'entraînement (6) dudit chariot (5) de chaque module, lesdits moyens d'entraînement étant non supportés par lesdits modules, lesdits moyens communs d'entraînement (6) portant des moyens d'accrochage automatique desdits chariots (5) et/ou chacun desdits chariots (5) portant des moyens d'accrochage automatique auxdits moyens communs d'entraînement (6).

## Claims

1. A device for disinfecting water by ultraviolet radiation intended for installation in an open channel of an installation for disinfecting water by ultraviolet radiation, said device including a plurality of longitudinal means forming UV lamps (3), each composed of a UV lamp and a protective casing made of a material transparent to UV and being distributed in a plurality of vertical modules forming a bank, each module being composed of a beam (1) to which at least two means are fixed forming vertical supports (2) holding at least one series of said means forming lamps (3) provided under said beam (1) one above the other, and at least one carriage (5) mounted free to move in translation on each of said beams (1), said carriages (5) carrying means (4) of cleaning said casings,
**characterised in that** it comprises common drive means (6) for said carriage (5) of each module, said drive means not being supported by said modules, said common drive means (6) carrying means for automatic attachment of said carriages (5) and/or each of said carriages (5) carrying means for automatic attachment to said common drive means (6).

2. A device according to claim 1, **characterised in that** said means for automatic attachment are designed to detach when said carriage and/or said cleaning means transmit a predetermined resistance to translation of said drive means (6).

3. A device according to either claim 1 or claim 2, **characterised in that** said means for automatic attachment include temporary connecting systems.

4. A device according to claim 3, **characterised in that** said temporary connecting systems are springs (51a), (51b).

5. A device according to any one of claims 1 to 4, **characterised in that** said common drive means (6) comprise at least one actuator (61) provided on at least one side of said bank.

6. A device according to claim 5, **characterised in that** said common drive means (6) comprise two actuators (61) arranged on either side of said bank.

7. A device according to claim 5 or claim 6, **characterised in that** said actuator or actuators (61) carries/carry at least one rod (62) extending substantially perpendicular to the longitudinal axis of said means forming lamps (3).

8. A device according to any one of claims 5 to 7, **characterised in that** the length of travel of the actuator or actuators (61) is greater than the length of said beams (1).

9. An installation for disinfecting water, **characterised in that** it includes at least one device for disinfecting water by ultraviolet radiation intended for installation in an open channel of an installation for disinfecting water by ultraviolet radiation, said device including a plurality of longitudinal means forming UV lamps (3) each composed of a UV lamp and a protective casing made of a material transparent to UV and being distributed in a plurality of vertical modules forming a bank, each module being composed of a beam (1) to which at least two means are fixed forming vertical supports (2) holding at least one series of said means forming lamps (3) provided under said beam (1) one above the other, and at least one carriage (5) mounted free to move in translation on each of said beams (1), said carriages carrying means (4) of cleaning said casings, **characterised in that** said device comprises common drive means (6) of said carriage (5) of each module, said drive means not being supported by said modules, said common drive means (6) carrying means for automatic attachment of said carriages (5) and/or each of said carriages (5) carrying means for automatic attachment to said common drive means (6).

## Patentansprüche

1. Vorrichtung zum Desinfizieren von Wasser durch ultraviolette Strahlung, zum Einbau in einem offenen Kanal einer Wasserdesinfektionsanlage durch Ultraviolettstrahlung, wobei die besagte Vorrichtung eine Vielzahl von UV-Lampen bildenden, langgestreckten Mitteln (3) umfasst, die jeweils aus einer UV-Lampe und aus einer Schutzhülle gebildet werden, die aus einem UV-Strahlung durchlässigen Material gefertigt ist, wobei diese Mittel nach einer Vielzahl von senkrecht stehenden Modulen verteilt sind, die eine Bank bilden, wobei jedes Modul aus einem Balken (1) gebildet wird, an dem mindestens zwei Mittel (2) befestigt sind, die senkrechte Halterungen bilden, welche mindestens eine Serie der besagten Lampen bildenden Mittel (3) aufnehmen, die unter dem besagten Balken (1) übereinander liegend vorgesehen sind, und wobei die Vorrichtung mindestens einen Wagen (5) aufweist, der auf einem jeden der besagten Balken (1) translatorisch bewegbar ist, wobei diese Wagen (5) Mittel zum Reinigen (4) der besagten Hüllen tragen,
**dadurch gekennzeichnet, dass** sie über gemeinsame Antriebsmittel (6) für den Wagen (5) eines jeden Moduls verfügt, wobei die besagten Antriebsmittel nicht von den besagten Modulen getragen werden, wobei die besagten gemeinsamen Antriebsmittel (6) über Mittel zum automatischen Einhaken der besagten Wagen (5) verfügen und/oder wobei jeder der besagten Wagen (5) über Mittel zum automatischen Einhaken an die besagten gemeinsamen Antriebsmittel (6) verfügt.

2. Vorrichtung nach Anspruch 1, **dadurch gekennzeichnet, dass** die besagten Mittel zum automatischen Einhaken so ausgelegt sind, dass sie ausklinken, wenn der besagte Wagen und/oder die besagten Reinigungsmittel einen im Voraus bestimmten Widerstand gegenüber der Verschiebung durch die besagten Antriebsmittel (6) leisten.

3. Vorrichtung nach einem der Ansprüche 1 oder 2, **dadurch gekennzeichnet, dass** die Mittel zum automatischen Einhaken nicht dauernd wirkende Verbindungsmittel umfassen.

4. Vorrichtung nach Anspruch 3, **dadurch gekennzeichnet, dass** es sich bei den nicht dauernd wirkenden Verbindungsmitteln um Federn (51 a), (51b) handelt.

5. Vorrichtung nach einem der Ansprüche 1 bis 4, **dadurch gekennzeichnet, dass** die besagten gemeinsamen Antriebsmittel (6) mindestens eine Antriebsspindel (61) aufweisen, die an mindestens einer Seite der besagten Bank angebracht ist.

6. Vorrichtung nach Anspruch 5, **dadurch gekennzeichnet, dass** die besagten gemeinsamen Antriebsmittel (6) zwei auf jeder Seite der Bank angebrachte Antriebsspindeln (61) aufweisen.

7. Vorrichtung nach einem der Ansprüche 5 oder 6, **dadurch gekennzeichnet, dass** die besagte(n) Antriebsspindel(n) (61) mindestens eine Stange (62) trägt (tragen), welche sich in etwa senkrecht zur Längsachse der besagten Lampen bildenden Mitteln (3) erstreckt (erstrecken).

8. Vorrichtung nach einem der Ansprüche 5 bis 7, **dadurch gekennzeichnet, dass** der Lauf der Antriebspindel(n) (61) die Länge der besagten Balken (1) übertrifft.

9. Wasserdesinfektionsanlage, **dadurch gekennzeichnet, dass** sie mindestens eine Vorrichtung zum Desinfizieren von Wasser durch ultraviolette Strahlung umfasst, zum Einbau in einem offenen Kanal einer Wasserdesinfektionsanlage durch Ultraviolettstrahlung, wobei die besagte Vorrichtung eine Vielzahl von UV-Lampen bildenden langgestreckten Mitteln (3) umfasst, die jeweils aus einer UV-Lampe und aus einer Schutzhülle gebildet werden, die aus einem UV-Strahlung durchlässigen Material gefertigt ist, wobei diese Mittel nach einer Vielzahl von senkrecht stehenden Modulen verteilt sind, die eine Bank bilden, wobei jedes Modul aus einem Balken (1) gebildet wird, an dem mindestens zwei Mittel (2) befestigt sind, die senkrechte Halterungen bilden, welche mindestens eine Serie der besagten Lampen bildenden Mittel (3) aufnehmen, die unter dem besagten Balken (1) übereinander liegend vorgesehen sind, und wobei die Vorrichtung mindestens einen Wagen (5) aufweist, der auf einem jeden der besagten Balken (1) translatorisch bewegbar ist, wobei diese Wagen Mittel zum Reinigen (4) der besagten Hüllen tragen,
**dadurch gekennzeichnet, dass** die besagte Vorrichtung gemeinsame Antriebsmittel (6) für den Wagen (5) eines jeden Moduls aufweist, wobei die besagten Antriebsmittel nicht von den besagten Modulen getragen werden, wobei die besagten gemeinsamen Antriebsmittel (6) über Mittel zum automatischen Einhaken der besagten Wagen (5) verfügen und/oder wobei jeder der besagten Wagen (5) über Mittel zum automatischen Einhaken an die besagten gemeinsamen Antriebsmittel (6) verfügt.
